Europäisches Patentamt

(19) European Patent Office

Office européen des brevets

(11) Veröffentlichungsnummer: **0 235 689. B1**

# EUROPÄISCHE PATENTSCHRIFT

(45) Veröffentlichungstag der Patentschrift:
21.08.91 Patentblatt 91/34

(51) Int. Cl.⁵: **B01D 29/88, B01D 29/50**

(21) Anmeldenummer: 87102365.1

(22) Anmeldetag: 19.02.87

(54) Verfahren zum Abtrennen von Feststoffen aus feststoffreichen Suspensionen.

(30) Priorität: 04.03.86 DE 3606986

(43) Veröffentlichungstag der Anmeldung:
09.09.87 Patentblatt 87/37

(45) Bekanntmachung des Hinweises auf die
Patenterteilung:
21.08.91 Patentblatt 91/34

(84) Benannte Vertragsstaaten:
BE DE FR GB IT NL

(56) Entgegenhaltungen:
EP-A- 0 091 822
DD-A- 159 605
DE-A- 2 831 607
SARTORIUS GMBH, Laborfiltration,Mikrobiologie,1979, Göttingen; Sartorius:"Druckfiltrationsgeräte mit
Aufgussraum", Seiten 91-99

(73) Patentinhaber: BAYER AG
W-5090 Leverkusen 1 Bayerwerk (DE)

(72) Erfinder: Lailach, Günter, Dr.
Bodelschwinghstrasse 23
W-4150 Krefeld (DE)
Erfinder: Gerken, Rudolf, Dr.
Ratherstrasse 79
W-4150 Krefeld (DE)
Erfinder: van Fürden, Armin
Schönwasserstrasse 212
W-4150 Krefeld (DE)
Erfinder: Wülbeck, Dieter
Emil-Fischer-Strasse 7
W-4150 Krefeld (DE)

## Beschreibung

Die vorliegende Erfindung betrifft ein Verfahren zum Abtrennen von Feststoffen aus feststoffreichen Suspensionen durch diskontinuierliche Filtration in Druckfiltern.

Feststoffreiche Suspensionen können durch Vakuum- oder Überdruckfiltration getrennt werden. Bevorzugt wird im Allgemeinen die kontinuierliche Vakuumfiltration, gegebenenfalls mit Precoat-Schichten zwecks Erzielung einer akzeptablen Filterleistung (Ullmanns Enzyklopädie d. techn. Chemie, Verlag Chemie, Weinheim, 4. Auflage 1972, Bd. 2, S. 188 ff).

Suspensionen sehr feinteiliger Feststoffe ergeben aber oft so geringe Filterleistungen, daß die Feststoffabtrennung durch Druckfiltration erfolgen muß. Dafür haben sich Filterpressen bewährt. Diese haben jedoch den Nachteil hoher spezifischer Apparatekosten, weil entweder bei geringem Automatisierungsgrad die Dauer für das Entleeren der Filterpressen, insbesondere bei der Filtration feststoffreicher Suspensionen, einen wesentlichen Teil der gesamten Chargendauer ausmacht oder bei hohem Automatisierungsgrad die absoluten Apparatekosten sehr hoch sind.

Wesentlich günstiger liegen die auf die Filterfläche bezogenen spezifischen Apparatekosten bei Druckfiltern vom Typ der Blatt- oder Kerzenfilter. Diese Filter haben aber den Nachteil, daß bei jeder Charge ein großes Behältervolumen vor der eigentlichen Filtration mit Suspension gefüllt und nach der Filtration entleert werden muß. Bei Suspensionen, die z.B. 10 Gew.-% oder mehr Feststoffe enthalten und je nach Druck und Durchlässigkeit des Filterkuchens zu kurzen Filtrationszeiten von Sekunden bis zu wenigen Minuten führen, fällt die verhältnismäßig lange Dauer des Füllens und des Entleerens des Filters mit der Suspension stark ins Gewicht. Bei Suspensionen mit mindestens 10 Gew.-%Feststoffgehalt beträgt das Volumen des Filtergehäuses je nach Feststoffgehalt das 1 bis 10-fache des pro Charge erhaltenen Filtratvolumens. Um kurze Füllzeiten zu erreichen, sind deshalb sehr große, aufwendige Pumpen erforderlich. Außerdem bereitet das häufige Ein- und Ausschalten derartiger Pumpen erhebliche Probleme. Hinzu kommt, daß durch das mehrfache Fördern der Suspension mit Pumpen die Feststoffteilchen selbst oder Agglomerate derselben zerstört werden und dadurch die Filtrierbarkeit verschlechtert und die Entfeuchtung des Filterkuchens erschwert wird. Aus diesen Gründen kamen bisher Druckfilter vom Typ der Blatt-oder Kerzenfilter für die Filtration feststoffreicher Suspensionen kaum zur Anwendung, insbesondere dann nicht, wenn die Filtration auch mit kontinuierlich arbeitenden Vakuumfiltern möglich ist.

In DD-A-159 605 sowie in der Broschüre der Sartorius GmbH "Laborfiltration, Mikrobiologie" von 1979, Göttingen wird eine kontinuierliche Druckfiltration mit pneumatischer Förderung kleiner Flüssigkeitsmengen (Labormaßstab) beschrieben, die zudem nur einen geringen Feststoffgehalt aufweisen und zum Teil schwer filtrierbar sind. Die Filtration soll vollständig, ohne Rückführung von nicht filtrierter Flüssigkeit durchgeführt werden.

Die Aufgabe der vorliegenden Erfindung war es daher, ein Verfahren zur Verfügung zu stellen, welches die oben beschriebenen Nachteile nicht aufweist unter der gleichzeitigen Ausnutzung der Vorteile von Druckfiltern.

Überraschenderweise wurde nun gefunden, daß dies möglich ist, wenn das Befüllen des Druckfilters ebenso wie die eigentliche Filtration aus einem separaten Druckbehälter erfolgt, in den auch die Suspension nach erfolgter Filtration entleert wird.

Gegenstand der vorliegenden Erfindung ist somit ein Verfahren zum Abtrennen von Feststoffen aus feststoffreichen Suspensionen durch diskontinuierliche Filtration in Druckfiltern, in die die zu filtrierenden Suspensionen pneumatisch aus einem Druckbehälter gefördert werden, wobei nach beendeter Filtration die nicht filtrierte Suspension wieder in den Druckbehälter zurückgefördert wird und das Volumen des Druckbehälters mindestens 10 %, vorzugsweise 10-100 %, größer als das des Druckfilters ist.

Das erfindungsgemäße Verfahren wird im folgenden anhand der Fig. erläutert, in der eine mögliche Anordnung zur Durchführung des erfindungsgemäßen Verfahrens dargestellt ist.

Die Anordnung besteht aus einem Druckfilter (1) vom Typ der Blatt- oder Kerzenfilter, einem damit verbundenen Druckbehälter (2), dessen Volumen mindestens 10 %, vorzugsweise mindestens 50 %, größer ist als das Volumen des Druckfilters (1), einer Pumpe (3) zur Einspeisung der Suspension in den Druckbehälter (2), einem Trennapparat (4) zur Trennung des Filtrats von dem zur Kuchenentfeuchtung benutzten Gas und einem Trenngefäß (5) zur Trennung der Restsuspension von dem Gas, mit dem dieser Rest aus dem Filter gedrückt wird. Als Trennapparat (4) können je nach Art und Tropfengröße des mit dem zwecks Entfeuchtung durch den Filterkuchen gedrückten Gas mitgerissenen Filtrats einfache Gefäße, Zyklonabscheider, Lamellenabscheider, Wire mesh-Abscheider, Filter, EGRs oder andere bekannte Trennapparate zum Einsatz kommen. Auf das Trenngefäß (5) kann gegebenenfalls verzichtet werden, wenn die Restentleerung in den Druckbehälter (2) geführt wird.

Die Suspension (26) wird mit der Pumpe (3) mit einer mittels Regelarmatur (13) eingestellten Förderleistung in den Druckbehälter (2) gefördert, die der durchschnittlichen Filtrationsleistung des diskontinuierlichen Prozesses entspricht. Aus dem gefüllten Druckbehälter (2) wird die Suspension diskontinuierlich mittels Druckgas (25) durch die Verbindungsleitung (27) in das Filter (1) gedrückt. Der Gasdruck wird so lange aufrechterhalten, bis das Filter (1) gefüllt und auf dem Filtermittel ein Filterkuchen der beabsichtigten Dicke erzeugt ist. Als Druckgas kann erfindungsgemäß jedes Gas eingesetzt weden, das sich inert gegenüber der zu filternden Suspension verhält. Ein bevorzugtes Gas ist Luft.

Je nach der Zusammensetzung der Suspension können aber auch Dampf, Stickstoff, Argon, Kohlendioxid, Helium und andere leicht zugängliche Gase eingesetzt werden.

Das bei dieser Filtration anfallende Filtrat (16) gelangt durch die geöffnete Absperrarmatur (8) in den Trennapparat (4), aus dem es in einem Filtratbehälter abfließt.

Nach Ablauf der für das Erreichen der beabsichtigten Kuchendicke erforderlichen Filtrationsdauer werden die Absperrarmatur (12) geschlossen und die Absperrarmatur (6) geöffnet, durch die Druckgas (14) in den suspensionsseitigen Raum des Filters (1) eintritt. Mit Hilfe des Druckgases kann gegebenenfalls die Suspension noch so weit filtriert werden, wie die Filterblätter oder Filterkerzen in die Suspension eintauchen. Anschließend kann die im unteren Teil des Filters (1) befindliche Suspension über die Leitung (27) in den Druckbehälter (2) zurückgefördert werden, indem aus dem Druckbehälter (2) durch die Absperrarmatur (11) Druckgas (24) abgelassen wird. Da bei diesem Vorgehen der Filterkuchen im unteren Teil des Filters (1) eine deutlich größere Dicke erreicht als im oberen Teil des Filters (1), wird für die feststoffreichen Suspensionen folgendes Vorgehen bevorzugt : Nach dem Öffnen der Absperrarmatur (6) wird die Absperrarmatur (11) so geöffnet, daß die Suspension über Leitung (27) in kurzer Zeit, aber ohne Druckstöße in den Druckbehälter (2) abfließt. Das durch die Absperrarmatur (6) eingespeiste Druckgas (14) bewirkt erstens das Herausdrücken der Suspension aus dem Filter (1), zweitens die Filtration eines geringen Teils der Suspension, in die die Filterelemente während des schnellen Entleerens noch eintauchen und drittens die Entfeuchtung des Filterkuchens. Das eingespeiste Druckgas (14) entweicht zusammen mit der mitgerissenen Feuchte durch die geöffnete Absperrarmatur (8) in die Trennapparatur (4), in der die Trennung in Filtrat (18) und Abgas (19) erfolgt. Nach ausreichender Entfeuchtung des Filterkuchens wird die Absperrarmatur (9) geöffnet und die restliche Suspension (21) aus dem Filter (1) gedrückt. Im Trenngefäß (5) erfolgt die Trennung der Suspension (22) vom Druckgas (20). Nach Entfernung der restlichen Suspension (21) werden die Absperrarmatur (6) geschlossen, die Absperrarmatur (10) geöffnet und der Filterkuchen (23) aus dem Filter (1) ausgetragen. Bei Blattfiltern erfolgt der Kuchenabwurf von Filtermittel auf bekannte Weise bevorzugt durch Rotation oder Vibration der Blätter. Bei den besonders bevorzugten Kerzenfiltern erfolgt der Kuchenaustrag durch Schließen der Absperrarmatur (8) und stoßweises Einblasen von Druckgas (15) in die Filtratleitung durch plötzliches Öffnen der Absperrarmatur (7).

Bei den bevorzugten Kerzenfiltern bietet die in der Fig. dargestellte tiefere Aufstellung des Druckbehälters (2) in bezug auf das Filter (1) besondere Vorteile, weil dadurch in der Verbindungsleitung (27) keine Absperrarmatur erforderlich ist und Erschütterungen vermieden werden, die durch das plötzliche Ausströmen der Suspension aus dem Filter (1) beim Öffnen einer derart großen Armatur auftreten können. Diese Erschütterungen können zum Abfallen eines Teils des Filterkuchens von den Filterkerzen und damit zu einer empfindlichen Störung des Prozesses führen. Durch die erfindungsgemäße Anordnung mit tieferer Aufstellung des Druckbehälters (2) und geregelter Filterentleerung durch Entspannen des Druckbehälters über die Absperrarmatur (11) werden derartige Prozeßstörungen vermieden.

Besonders bevorzugt ist somit die Ausführungsform des erfindungsgemäßen Verfahrens, bei der der Druckbehälter unterhalb des Druckfilters angeordnet ist.

Bei der Filtration von Suspensionen, die gut haftende Filterkuchen ergeben oder bei der Verwendung von Blattfiltern kann die Aufstellung des Filters (1) und des Druckbehälters (2) auf gleichem Niveau Vorteile bieten. Die Aufstellung, die den Einbau einer Absperrarmatur in die Leitung (27) erfordert, liegt durchaus im Rahmen der Erfindung, da auch dabei das schnelle Füllen und Entleeren des Filters ohne Einsatz von Pumpen erfolgt.

Die Filtration wird vorteilhafterweise immer so durchgeführt, daß während des Füllens des Druckfilters und während der Filtration der Druck im Druckbehälter höher als im Druckfilter ist.

Besondere Vorteile bietet die Erfindung bei der Filtration feststoffreicher Suspensionen, wie sie bei der Herstellung von Pigmenten anfallen, z.B. von Eisenoxid- und Titandioxidpigmenten oder bei der Abtrennung von Metallsalzen aus Schwefelsäure im Rahmen einer Abfallsäureaufarbeitung.

In diesen Fällen wird mit guten Ergebnissen der Druck im Druckbehälter während der Filtration so lange aufrechterhalten oder gegebenenfalls erhöht, bis die geforderte Filterkuchendicke von 15 bis 50 mm erreicht ist.

Die Vorteile des erfindungsgemäßen Verfahrens und der dazugehörigen apparativen Anordung sollen anhand eines Beispiels verdeutlicht werden, ohne daß hierin eine Einschränkung des erfindungsgemäßen Verfahrens zu sehen ist.

Beispiel

Es wurde ein Fundabac®-Kerzenfilter (1) der Fa. DrM (Schweiz) mit einer Filterfläche von 25 m² und einem Volumen von 10 m³ eingesetzt. Pro Charge wurden 5 t (entsprechend 2,9 m³) einer Suspension von 1,38 t Metallsulfaten in 3,62 t 65 %iger Schwefelsäure filtriert. Die Dauer einer Charge betrug 16 min, so daß sich eine Filterleistung von 18,75 t Suspension/h ergab.

Der Druckbehälter (2) hatte ein Volumen von 16 m³. Er wurde vor Beginn der Filtration mittels Pumpe (3) (Förderleistung : 12 m³/h bei 8 bar Gegendruck) zu 80 % mit Suspension (26) gefüllt. Bei Beginn der Filtration wurde mittels Regelventil (13) ein Mengenstrom von 10,7 m³ Suspension/h eingestellt. Das Filter (1) wurde während 2 min aus Behälter (2) gefüllt, indem die Suspension mit Druckluft (25) von 7 bar durch die Leitung (27) in das Filter (1) gedrückt wurde. Der Volumenstrom durch Leitung (27) entsprach dabei 300 m³/h. An das Füllen des Filters (1) und die Verdrängung der Luft aus dem Filter (1) schloß sich die eigentliche Filtration unmittelbar an. Während 90 s wurden 2,9 m³ Suspension filtriert, entsprechend einem Volumenstrom von 116 m³/h durch Leitung (27). Nach insgesamt 3,5 min wurden Ventil (12) geschlossen, Ventil (6) geöffnet (Einspeisung von Druckluft mit 7 bar) und der Druckbehälter (2) durch langsames Öffnen von Ventil (11) entspannt. Beim Erreichen des Minimalstandes der Suspension im Filter (1) wurde Ventil (11) nach 75 s geschlossen und der Filterkuchen 5 min lang mit Druckluft (14) trockengeblasen. Das Filtrat (18) wurde im Lamellenabscheider (4) von der Druckluft getrennt, die als Abluft (19) entwich. Danach wurde das Ventil (9) geöffnet und die restliche Suspension aus dem Filter (1) in das Trenngefäß (5) gedrückt. Nach dem Durchschlagen der Druckluft wurde das Ventil (11) geöffnet, Ventil (6) geschlossen, das Filter über die Ventile (8) und (9) entspannt und anschließend der Schieber (10) geöffnet. Nach Schließen des Ventils (8) wurde durch schnelles Öffnen des Ventils (7) der Filterkuchen (23) mittels eines Preßluftstoßes (15) abgeworfen.

Die Dauer der gesamten Charge betrug 16 min. Es fielen 1,8 t Filterkuchen mit 23,4 % Restfeuchte und 3,2 t 65 %ige Schwefelsäure, entsprechend 2 m² Filtrat, an. Die Kuchendicke betrug ca. 35 mm.

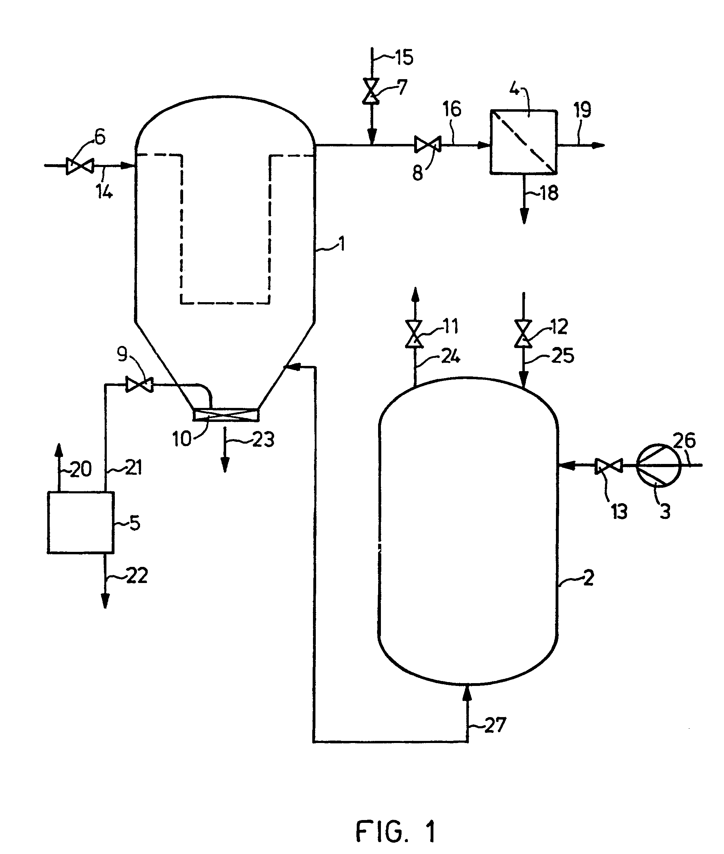

## Patentansprüche

1. Verfahren zum Abtrennen von Feststoffen aus feststoffreichen Suspensionen durch diskontinuierliche Filtration in Druckfiltern, in die die zu filtrierenden Suspensionen pneumatisch aus einem Druckbehälter gefördert werden, dadurch gekennzeichnet, daß nach beendeter Filtration die nicht filtrierte Suspension wieder in den Druckbehälter zurückgefördert wird und das Volumen des Druckbehälters mindestens 10 %, vorzugsweise 10-100 %, größer als das des Druckfilters ist.

2. Verfahren gemäß Anspruch 1, dadurch gekennzeichnet, daß das Druckfilter ein Blattfilter oder Kerzenfilter ist

3. Verfahren gemäß einem der Ansprüche 1 oder 2, dadurch gekennzeichnet, daß der Druckbehälter unterhalb des Druckfilters angeordnet ist.

4. Verfahren gemäß einem der Ansprüche 1 bis 3, dadurch gekennzeichnet, daß während des Füllens des Druckfilters und während der Filtration der Druck im Druckbehälter höher als im Druckfilter ist.

5. Verfahren gemäß einem der Ansprüche 1 bis 4, dadurch gekennzeichnet, daß der Druck im Druckbehälter während der Filtration so lange aufrechterhalten oder gegebenenfalls erhöht wird, bis die geforderte Filterkuchendicke von 15 bis 50 mm erreicht ist.

6. Verwendung des Verfahrens gemäß einem der Ansprüche 1 bis 5 zum Abtrennen von Eisenoxid- oder Titandioxidpigmenten aus ihren Suspensionen.

7. Verwendung des Verfahrens gemäß einem der Ansprüche 1 bis 5 zum Abtrennen von im Rahmen einer Abfallsäureaufarbeitung anfallenden Metallsalzen aus ihren Suspensionen.

## Claims

1. A method whereby solids are separated from suspensions rich in solids by continuous filtration in pressure filters into which the suspensions for filtering are pneumatically conveyed from a pressure container, characterised in that at the end of filtration the non-filtered suspension is returned to the pressure container, and the volume of the pressure container is at least 10% and preferably 10 - 100% greater than the volume of the pressure filter.

2. A method according to claim 1, characterised in that the pressure filter is a plate filter or a multiple-tube filter.

3. A method according to claim 1 or 2, characterised in that the pressure container is disposed underneath the pressure filter.

4. A method according to any of claims 1 to 3, characterised in that during filtration and during filling of the pressure filter, the pressure in the pressure container is higher than in the pressure filter.

5. A method according to any of claims 1 to 4, characterised in that the pressure in the pressure container during filtration is maintained or, if required, increased until the filter cake reaches the required thickness of 15 to 50 mm.

6. Use of the method according to any of claims 1 to 5 for separating iron oxide or titanium dioxide pigments from suspensions thereof.

7. Use of the method according to any of claims 1 to 5 for separating metal salts from suspensions thereof during the processing of waste acid.

## Revendications

1. Procédé pour séparer des matières solides de suspensions riches en ces matières par filtration discontinue dans des filtres à pression dans lesquels les suspensions à filtrer sont amenées par voie pneumatique depuis un récipient sous pression, caractérisé en ce que lorsque la filtration est terminée, la suspension non filtrée est recyclée dans le récipient sous pression et le volume de ce récipient est supérieur d'au moins 10 % et de préférence de 10 à 100 % à celui du filtre à pression.

2. Procédé suivant la, revendication 1, caractérisé en ce que le filtre à pression est un filtre à feuilles ou un filtre à bougies.

3. Procédé suivant l'une des revendications 1 et 2, caractérisé en ce que le récipient sous pression est disposé en dessous du filtre à pression.

4. Procédé suivant l'une des revendications 1 à 3, caractérisé en ce que la pression dans le récipient est plus haute que dans le filtre à pression pendant le remplissage de ce filtre et pendant la filtration.

5. Procédé suivant l'une des revendications 1 à 4, caractérisé en ce que la pression dans le récipient est entretenue ou, le cas échéant, élevée pendant la filtration jusqu'à ce que l'épaisseur désirée de 15 à 50 mm du gâteau de filtre ait été atteinte.

6. Utilisation du procédé suivant l'une des revendications 1 à 5 pour séparer des pigments d'oxyde de fer ou de dioxyde de titane de leurs suspensions.

7. Utilisation du procédé suivant l'une des revendications 1 à 5 pour séparer de leurs suspensions des sels métalliques obtenus dans le cadre d'un traitement d'acide résiduaire.

FIG. 1